# EUROPÄISCHE PATENTSCHRIFT

(11) **EP 0 962 404 B1**
(45) Veröffentlichungstag und Bekanntmachung des Hinweises auf die Patenterteilung: **16.08.2000**
(21) Anmeldenummer: 98102251.0
(22) Anmeldetag: 10.02.1998
(51) Int. Cl.: B65G 1/02, A47B 47/02

(54) **Lagerregal, insbesondere für die Lagerung bestückter Paletten**
Storage shelving, especially for the storage of loaded pallets
Etagère de stockage, en particulier pour le stockage de palettes chargées

(43) Veröffentlichungstag der Anmeldung: 08.12.1999
(73) Patentinhaber: NEDCON MAGAZIJNINRICHTING B.V., NL-7000 AA Doetinchem (NL)
(72) Erfinder: Hollander, R.R., 7251 KC Vorden (NL)
(74) Vertreter: Stenger, Watzke & Ring Patentanwälte

(56) Entgegenhaltungen:
- DE-A- 4 324 728
- DE-C- 685 184
- FR-A- 2 165 750
- GB-A- 1 595 257

## Beschreibung

Die Erfindung betrifft ein Lagerregal für die Lagerung quaderförmiger Stückgüter, deren Gewichtskraft jeweils über eine erste Traverse und mindestens eine weitere, dahinter angeordnete Traverse auf eine vertikale Stützkonstruktion abgeführt wird, wobei die Traversen vertikale Stützen horizontal verbinden und auf den Traversen Stützelemente befestigt sind, auf denen die Stückgüter aufliegen, wobei zumindest unter jeder der vier Ecken des jeweiligen Stückgutes ein eigenes, von den übrigen Stützelementen getrenntes Stützelement sitzt.

Verwendung finden solche Regale in erster Linie in Großregallagern mit automatischer, rechnergesteuerter Ein- und Auslagerung bestückter Paletten. Die einzelnen Waren ruhen auf normgerechten Paletten, die dann mit Hilfe speziell konstruierter Fördergeräte auf Quertraversen der Lagerregale abgesetzt und von diesen wieder abgehoben werden können.

Abhängig von der Bauart der Palette kann ein gewisser Freiraum zwischen der Unterseite der Palette und der Quertraverse erforderlich sein, damit die Teleskopgabeln des Fördergerätes in diesen Freiraum einfahren können, um die Palette dort abzuheben oder abzusetzen. Zur Bereitstellung dieses vertikalen Freiraumes sind Konstruktionen bekannt, bei denen die Paletten nicht unmittelbar auf den Quertraversen aufliegen, sondern auf erhöhten Stützelementen, die sich auf der Oberseite der Traversen befinden. Bei diesen Stützelementen handelt es sich um Profile, die sich nach Art einer Schiene über die Tiefe des Regals erstrecken und hierbei auf der vorderen Traverse und einer dahinter angeordneten Traverse zugleich aufliegen. Diese sich in Tiefenrichtung erstreckenden Profile müssen bei der Erstellung des Lagerregals daher auch sowohl mit der vorderen als auch mit mindestens einer dahinter angeordneten Traverse verschraubt werden. Um im Hinblick auf die zeitaufwendige Endmontage diese Verschraubung etwas zu erleichtern, werden für die Traversen offene Profile eingesetzt, die allerdings im Vergleich zu geschlossenen Stahlprofilen desselben Querschnitts eine geringere Belastbarkeit aufweisen. Die montagebedingte Verwendung offener Profile für die Traversen erfordert daher größere Querschnitte und insbesondere Querschnittshöhen der Traversen. Der hierdurch eintretende Verlust an nutzbarer Höhe ist zwar in jeder Regalebene für sich betrachtet nicht groß, da jedoch gattungsgemäße Lagerregale bis zur Höhe von über 30 m errichtet werden, erstehen durch die Verwendung offener Traversenprofile aber dennoch erhebliche Platznachteile.

Wenngleich die Verwendung offener Stahlprofile die Zugänglichkeit zu den Verschraubungsstellen vereinfacht und damit auch die Montage etwas erleichtert, ist zur Errichtung der gattungsgemäßen Lagerregale gleichwohl ein erheblicher Montageaufwand und damit kostenträchtiger Zeitaufwand verbunden.

Ein Lagerregal mit den eingangs genannten Merkmalen ist aus der DE 685 184 bekannt. Das Lagerregal ist sukzessive aus einzelnen, aus kubischen Rahmengestellen bestehenden Elementen zusammensetzbar, indem diese Elemente aufeinander gestapelt werden. Auf Quertraversen der Rahmengestelle sind nach oben hin aus den Rahmengestellen herausragende Stützelemente befestigt, die jeweils aus einem durch zweimaliges gleichsinniges Biegen hergestellten Metallstück bestehen. Derartige Stückelemente befinden sich an allen vier Eckpunkten des Rahmengestells, wodurch eine Auflage für einen in der nächst höheren Ebene anzuordnenden, an seiner Unterseite mit einem Auslauftrichter versehenen Kübel gebildet wird. Beim Stapeln wird auf die Stützelemente ein Kübel der nächst höheren Stapelebene aufgesetzt. Sodann wird von oben her über den Kübel ein weiteres Rahmengestell aufgesetzt, welches sich auf dem darunter angeordneten Rahmengestell abstützt. Sodann kann auf der so gebildeten Ebene wiederum ein Kübel aufgesetzt werden etc.

Aus der DE 43 24 782 A1 schließlich ist ein Lagergestell bekannt, in dem in mehreren Ebenen seitliche Profile befestigt sind, um die Last der zu lagernden Paletten aufzunehmen. In den fest montierten Profilen sind weitere Profile schwenkbar gelagert, wodurch sich die auf diesen Profilen aufliegende Palette in eine geneigte Lage verschwenken läßt. Dies erleichtert die Entnahme der auf den Paletten angeordneten Stückgütern.

Der Erfindung liegt die **Aufgabe** zugrunde, ein insbesondere für die Lagerung bestückter Paletten geeignetes Lagerregal zu schaffen, das sich im Vergleich zu bekannten, gleich stark belastbaren Regalen mit weniger Montageaufwand und damit in kürzerer Zeit erstellen läßt.

Zur **Lösung** wird bei einem Lagerregal der eingangs genannten Art vorgeschlagen, daß zur Lagerung von bestückten Paletten, die in im wesentlichen horizontaler Richtung in das Lagerregal ein- und auslagerbar sind, das Lagerregal mehrstöckig mit vertikalen Stützen ausgebildet ist, zwischen denen in den jeweiligen Lagerebenen die Traversen befestigt sind, und daß jedes Stützelement sowohl mit der Oberseite der Traverse als auch zusätzlich mit einer vertikalen Fläche der Traverse verschweißt ist.

Ein solchermaßen ausgebildetes Lagerregal zeichnet sich dadurch aus, daß es sich im Vergleich zu den bekannten Regalen mit weniger Montageaufwand und damit in kürzerer Zeit erstellen läßt. Da bereits vor der Montage des Regals die einzelnen Traversen mit den daran zu befestigenden Stützelementen versehen werden, wozu die Stützelemente an den Traversen verschweißt werden, entfallen bei der Endmontage vor Ort zusätzliche Befestigungsarbeiten zur Verbindung der Stützelemente mit den Traversen. Vorzugsweise sind bei der Anlieferung der Traversen an den Ort der Endmontage diese einschließlich der daran bereits angeschweißten Stützelemente vollständig lakkiert oder in anderer Weise oberflächenbehandelt, so daß auch diesbezügliche Arbeiten nicht mehr erforderlich sind. Zur Montage des Lagerregals ist es daher nach Aufstellung und etwaiger Querverstrebung der vertikalen Stützen lediglich noch erforderlich, die bereits vorgefertigten und mit den Stützelementen für die Paletten versehenen Traversen zwischen diesen Stützen zu befestigen. Weitere Montageschritte sind nicht erforderlich.

Zur weiteren Senkung der Kosten für die Errichtung des Lagerregals wird ferner vorgeschlagen, daß jedes Stützelement aus einem durch zweimaliges gleichsinniges Biegen geformten Metallstück in Gestalt eines nach unten hin offenen "U" besteht, dessen beiden Schenkel mit der Traverse verschweißt sind. Zur Erzielung einer erhöhten Festigkeit gegen Querkräfte wird ferner vorgeschlagen, daß die Schenkel schräg zueinander verlaufen.

Um die Gewichtskräfte der beladenen Paletten besser auf die darunter angeordneten Traversen abzuführen, wird mit einer weiteren Ausgestaltung der Erfindung vorgeschlagen, daß das Stützelement mit der Oberseite der Traverse und zusätzlich mit zumindest einer vertikalen Fläche der Traverse verschweißt ist.

Wie bereits weiter oben beschrieben, ist es zur Erzielung einer geringen Querschnittshöhe der Traverse von Vorteil, wenn diese als geschlossenes Metallprofil mit vorzugsweise rechteckigem Querschnitt gestaltet ist.

Schließlich wird vorgeschlagen, jene Stützelemente, welche sich unter dem hinteren und eventuell auch dem vorderen Ende der Palette befinden, mit einem einstückig an dem Stützelement angeformten, über die Stützebene des Stützelementes vertikal hinausragenden Anschlag zu versehen.

Weitere Einzelheiten und Vorteile der Erfindung werden nachfolgend anhand von Ausführungsbeispielen erläutert, die auf der Zeichnung dargestellt sind. Im einzelnen zeigen:
- Fig. 1: ausschnittsweise eine Ebene eines mehrstöckig aufgebauten Lagerregales für die Lagerung bestückter Paletten, wobei eine Palette sowie zwei unterschiedliche Ausführungsformen von Stützelementen dargestellt sind und
- Fig. 2: eine vergrößerte Darstellung der Einzelheit II der Fig. 1 in einer Seitenansicht.

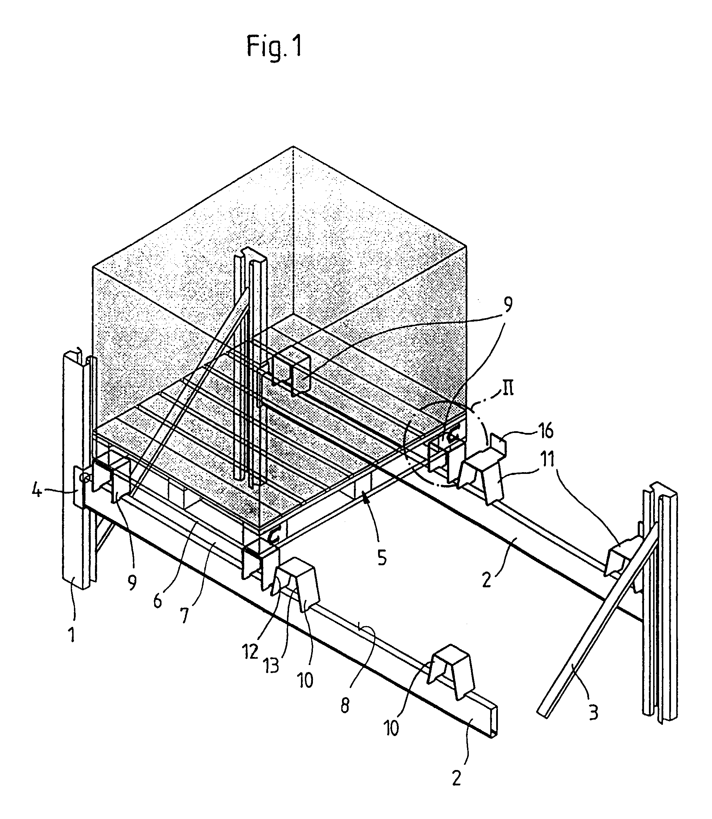

In Fig. 1 ist lediglich ein kleiner Ausschnitt aus einem ausgedehnten Regal zur Lagerung normierter, beladener Paletten dargestellt. Derartige Regale können, abhängig von der jeweiligen Höhe der Fächer, 15 und mehr Stockwerke hoch sein. Die Grundstruktur des Regals besteht aus vertikalen Stützen 1 und horizontalen Traversen 2, welche die Stützen 1 miteinander verbinden und der Gesamtkonstruktion nach Art eines Fachwerks Stabilität verleihen. Zur Erzielung der erforderlichen Stabilität sind ferner schräge Verstrebungen 3 zwischen den Stützen 1 angeordnet.

Beim Ausführungsbeispiel sind die vertikalen Stützen 1 als C- oder U-Profile gestaltet, in deren offenen Kanälen die schrägen Verstrebungen 3 verschraubbar sind. Als Stützen 1 kommen aber ebenso anders gestaltete Profile in Betracht, beispielsweise auch hochbelastbare Profile aus warmgewalztem Stahl.

Bei den Traversen 2 handelt es sich, wie auf der Zeichnung erkennbar ist, um geschlossene Stahlprofile mit rechteckigem Querschnitt. Diese sind an ihren Enden über Verbindungselemente 4 an den vertikalen Stützen 1 angeschraubt.

Die auf der Zeichnung dargestellte Palette 5 erfordert, da ihr stirnseitig angeordnetes Unterholz 6 zugleich die Unterseite der Palette 5 bildet, einen gewissen vertikalen Freiraum 7, in den zum Einlagern und Auslagern der Palette 5 die Teleskopgabeln des verwendeten Fördergerätes einfahren können. Zur Bereitstellung dieses vertikalen Freiraumes 7 liegt die Palette 5 mit ihrer Unterseite nicht unmittelbar auf den Traversen 2 auf, sondern es befindet sich zwischen der Oberseite 8 der Traversen 2 und der Unterseite der Palette 5 eine Mehrzahl von Stützelementen 9, 10, 11. Unter jeder der vier Ecken der Palette 5 und eventuell auch noch einmal unter der Mitte der Palette befindet sich ein eigenes, von den übrigen Stützelementen getrenntes Stützelement 9, 10, 11, welches mit der darunterliegenden Traverse 2 verschweißt ist. Jedes Stützelement 9, 10 besteht aus einem durch zweimaliges gleichsinniges Biegen geformten Metallstück in Gestalt eines nach unten hin offenen "U", dessen beiden Schenkel 12, 13 mit der Traverse 2 an zwei zueinander beabstandeten Längenabschnitten derselben verschweißt sind.

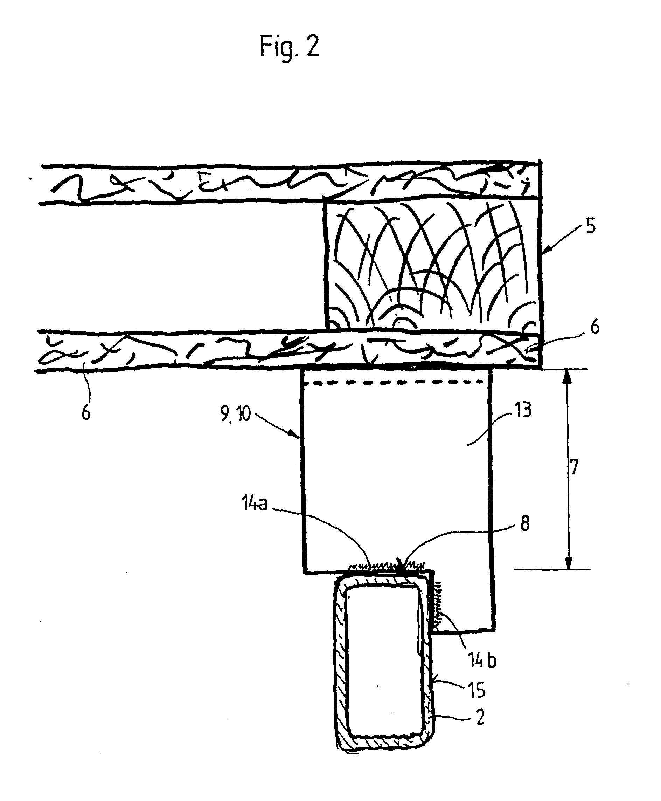

Fig. 2 läßt die Lage der hierbei verwendeten Schweißnaht 14 erkennen, sowie ferner Einzelheiten der Gestaltung der Stützelemente 9, 10. Das Stützelement 9, 10 ist daher sowohl mit der Oberseite 8 der Traverse 2 über eine Schweißnaht 14a und zusätzlich mit der nach außen weisenden, vertikalen Fläche 15 der Traverse 2 über eine weitere Schweißnaht 14b verschweißt. Diese Schweißnähte 14a, 14b finden sich an beiden, jeweils mit Stufe gestalteten Schenkeln 12, 13 des Stützelementes.

Die einzelnen Stützelemente 9, 10, 11 sind daher ausschließlich mit der jeweils darunter angeordneten Traverse 2 dauerhaft verbunden, wohingegen sich über die Tiefe des Regals erstreckende Verbindungen zwischen den Traversen 2 fehlen. Beim Ausführungsbeispiel erfolgt die Lagerung der einzelnen Paletten 5 auf jeweils zwei Traversen, einer vorderen Traverse mit Stützelementen unter den vorderen Ecken der Palette 5, und einer hinteren Traverse mit Stützelementen unter den hinteren Ecken der Palette. Je nach Belastungsfall ist es jedoch auch möglich, noch eine weitere Traverse zwischen den dargestellten Traversen vorzusehen, auf der sich über entsprechende Stützelemente die Mitte der Palette abstützt. In diesem Fall würde jede Palette 5 auf insgesamt sechs Stützelementen zugleich aufliegen.

Auch die Länge der Traverse und damit die Anzahl der darauf abzustellenden Paletten hängt vom jeweiligen Belastungsfall ab. Beim Ausführungsbeispiel nach Fig. 1 ist jede Traverse 2 mit insgesamt vier Stützelementen 9, 10 versehen, dient also der Aufnahme von zwei Paletten. Je nach Lastfall befinden sich auf jeder Traverse aber auch nur zwei Stützelemente oder sechs oder acht Stützelemente für drei bzw. vier nebeneinander anzuordnende Paletten.

Fig. 1 läßt ferner zwei verschiedene Ausführungsformen für die Stützelemente erkennen. Bei den rechts dargestellten Stützelementen 10 verlaufen die beiden Schenkel 12, 13 schräg zueinander, wodurch sich eine etwas bessere Kraftableitung ergibt als bei den in Fig. 1 links dargestellten Stützelementen 9 mit schräg zueinander verlaufenden Schenkeln. Ferner ist die hintere Traverse 2 mit einem weiteren Typ von Stützelementen 11 versehen, die einen an dem Stützelement einstückig angeformten, über die Stützebene vertikal hinausragenden Anschlag 16 für die darauf abgesetzte Palette aufweisen.

Die Traverse 2 mit den darauf angeschweißten Stützelementen steht bei der Montage des Lagerregals als einstückiges und vorzugsweise bereits insgesamt vorlackiertes Teil zur Verfügung. Das Verschweißen der Traversen mit den Stützelementen erfolgt daher in einem vorgelagerten Herstellungsschritt und vorzugsweise vollautomatisch. In dem betreffenden Fertigungsprozeß kann durch entsprechende Auslegung der verwendeten Biegewerkzeuge ferner erreicht werden, die Stützelemente in den jeweils gewünschten Höhen herzustellen. Die Biegung der Stützelemente aus einem Blechformteil sowie das anschließende Verschweißen mit der Traverse erfolgt also in einem geschlossenen On-Line-Fertigungsprozeß, an den sich dann der Lackierprozeß anschließt.

## Patentansprüche

1. Lagerregal für die Lagerung quaderförmiger Stückgüter, deren Gewichtskraft jeweils über eine erste Taverse und mindestens eine weitere, dahinter angeordnete Traverse auf eine vertikale Stützkonstruktion abgeführt wird, wobei die Traversen vertikale Stützen horizontal verbinden und auf den Traversen Stützelemente befestigt sind, auf denen die Stückgüter aufliegen, wobei zumindest unter jeder der vier Ecken des jeweiligen Stückgutes ein eigenes, von den übrigen Stützelementen getrenntes Stützelement sitzt,
**dadurch gekennzeichnet,**
daß zur Lagerung von bestückten Paletten (5), die in im wesentlichen horizontaler Richtung in das Lagerregal ein- und auslagerbar sind, das Lagerregal mehrstöckig mit vertikalen Stützen (1) ausgebildet ist, zwischen denen in den jeweiligen Lagerebenen die Traversen (2) befestigt sind, und daß jedes Stützelement (9, 10, 11) sowohl mit der Oberseite (8) der Traverse (2) als auch zusätzlich mit einer vertikalen Fläche (15) der Traverse (2) verschweißt ist.

2. Lagerregal nach Anspruch 1, dadurch gekennzeichnet, daß jedes Stützelement (9, 10, 11) aus einem durch zweimaliges gleichsinniges Biegen geformten Metallstück in Gestalt eines nach unten hin offenen "U" besteht, dessen beide Schenkel (12, 13) mit der Traverse (2) verschweißt sind.

3. Lagerregal nach Anspruch 2, dadurch gekennzeichnet, daß die Schenkel (12, 13) schräg zueinander verlaufen.

4. Lagerregal nach einem der vorangehenden Ansprüche, dadurch gekennzeichnet, daß die Traverse (2) ein geschlossenes Metallprofil mit vorzugsweise rechteckigem Querschnitt ist.

5. Lagerregal nach einem der vorangehenden Ansprüche, gekennzeichnet durch einen an dem Stützelement (11) einstückig angeformten, über die Stützebene des Stützelementes (11) vertikal hinausragenden Anschlag (16).

## Claims

1. Storage rack for storing cuboidal piece goods, of which the weight is dissipated to a vertical supporting structure in each case via a first crossmember and at least one further crossmember arranged behind the first, it being the case that the crossmembers connect vertical supports horizontally and fastened on the crossmembers are supporting elements on which the piece goods rest, it being the case that a dedicated supporting element, which is separate from the rest of the supporting elements, is seated at least beneath each of the four corners of the respective piece-goods article, characterized in that, in order to store loaded pallets (5) which can be stored in, and retrieved from, the storage rack in essentially the horizontal direction, the storage rack is designed in a number of storeys with vertical supports (1) between which the crossmembers (2) are fastened on the respective storage levels, and in that each supporting element (9, 10, 11) is welded both to the top side (8) of the crossmember (2) and additionally to a vertical surface (15) of the crossmember (2).

2. Storage rack according to Claim 1, characterized in that each supporting element (9, 10, 11) comprises a piece of metal which is shaped by bending twice in the same direction and is in the form of a downwardly open "U", of which the two legs (12, 13) are welded to the crossmember (2).

3. Storage rack according to Claim 2, characterized in that the legs (12, 13) run obliquely in relation to one another.

4. Storage rack according to one of the preceding claims, characterized in that the crossmember (2) is a closed metal profile of preferably rectangular cross section.

5. Storage rack according to one of the preceding claims, characterized by a stop (16) which is integrally formed on the supporting element (11) and projects out vertically beyond the support plane of the supporting element (11).

## Revendications

1. Étagère de stockage pour le stockage de marchandises en colis parallélépipédiques dont le poids de chacun est réparti sur une structure verticale de soutien par l'intermédiaire d'une première traverse et d'au moins une traverse supplémentaire disposée derrière, les traverses reliant horizontalement des montants verticaux et, sur les traverses, étant fixés des éléments de soutien sur lesquels reposent les marchandises en colis, un élément de soutien individuel séparé des autres éléments de soutien étant placé au moins sous chacun des quatre coins de chacune des marchandises en colis, caractérisée en ce que, pour stocker des palettes garnies (5) qui peuvent y entrer et en sortir dans la direction sensiblement horizontale, l'étagère de stockage est constituée de plusieurs étages avec des montants verticaux (1), entre lesquels les traverses (2) sont fixées dans chacun des plans de stockage, et en ce que chaque élément de soutien (9, 10, 11) est soudé aussi bien au dessus (8) de la traverse (2) qu'à une face verticale (15) de la traverse (2).

2. Étagère de stockage selon la revendication 1, caractérisée en ce que chaque élément de soutien (9, 10, 11) est constitué par une pièce métallique cintrée deux fois dans le même sens sous la forme d'un "U" ouvert vers le bas, dont les deux branches (12, 13) sont soudées à la traverse (2).

3. Étagère de stockage selon la revendication 2, caractérisée en ce que les branches (12, 13) sont inclinées l'une par rapport à l'autre.

4. Étagère de stockage selon une des revendications précédentes, caractérisée en ce que la traverse (2) est un profilé métallique fermé à section transversale de préférence rectangulaire.

5. Étagère de stockage selon une des revendications précédentes, caractérisée par une butée (16) qui est réalisée d'un seul tenant avec l'élément de soutien (11) et qui dépasse verticalement au-dessus du plan de soutien de l'élément de soutien (11).
